# EUROPEAN PATENT SPECIFICATION

(11) **EP 3 396 110 B1**
(45) Date of publication and mention of the grant of the patent: **13.11.2019**
(21) Application number: 18169470.4
(22) Date of filing: 26.04.2018
(51) Int. Cl.: F01D 5/30, F01D 5/32

(54) **ROTATABLE BODY, METHOD OF MANUFACTURING THE SAME, AND STEAM TURBINE INCLUDING THE SAME**
DREHBARER KÖRPER, VERFAHREN ZUR HERSTELLUNG DAVON UND DAMPFTURBINE DAMIT
CORPS ROTATIF, SON PROCÉDÉ DE FABRICATION ET TURBINE À VAPEUR L'INCLUANT

(30) Priority: 28.04.2017 KR 20170055423
(43) Date of publication of application: 31.10.2018
(73) Proprietor: Doosan Heavy Industries & Construction Co., Ltd., Seongsan-gu Changwon-si, Gyeongsangnam-do 51711 (KR)
(72) Inventor: JU, Jae Min, 51170 Gyeongsangnam-do (KR)
(74) Representative: Ter Meer Steinmeister & Partner

(56) References cited:
- JP-A- S61 129 403
- US-A- 5 511 948
- US-A1- 2012 099 999

## Description

### BACKGROUND OF THE INVENTION

### Field of the Invention

Exemplary embodiments of the present invention relate to a rotatable body, a method of manufacturing the rotatable body, and a steam turbine including the rotatable body, and more particularly, to a rotatable body configured to enable buckets to be stably coupled to the rotor in a tangential entry manner, a method of manufacturing the rotatable body, and a steam turbine including the rotatable body.

### Description of the Related Art

Generally, a turbine is a machine which converts the energy of fluid such as water, gas, or steam into mechanical work. Typically, a turbo machine, in which a plurality of blades are fitted around a circumferential portion of a rotatable body so that the rotatable body is rotated at a high speed by discharging steam or gas toward the blades, is referred to as a turbine.

Such turbines may be classified into, among others, a water turbine using the energy of elevated water; a steam turbine using the energy of flowing steam; a gas turbine using the energy of high-temperature, high-pressure gas; and an air turbine using the energy of high-pressure, compressed air. Among these, a steam turbine is configured to convert steam energy into mechanical work by rotating a rotatable body using steam projected onto blades from a nozzle. Such a steam turbine includes a casing which forms an outer appearance and frame of the turbine, the rotatable body rotatably installed in the casing, and the nozzle configured to discharge steam toward the rotatable body.
Korean Patent No. 10-1376716 discloses a rotatable body and a steam turbine including the same, in which a related art rotatable body includes a rotor and a plurality of buckets coupled to the rotor and configured to convert the energy of flowing steam discharged from a nozzle (not shown) into mechanical work. Here, a number (n) of buckets are coupled to a rotor in a so-called tangential entry manner, in which each bucket is installed by inserting it into a tangential entry and then sliding the inserted bucket in a circumferential direction of the rotor.

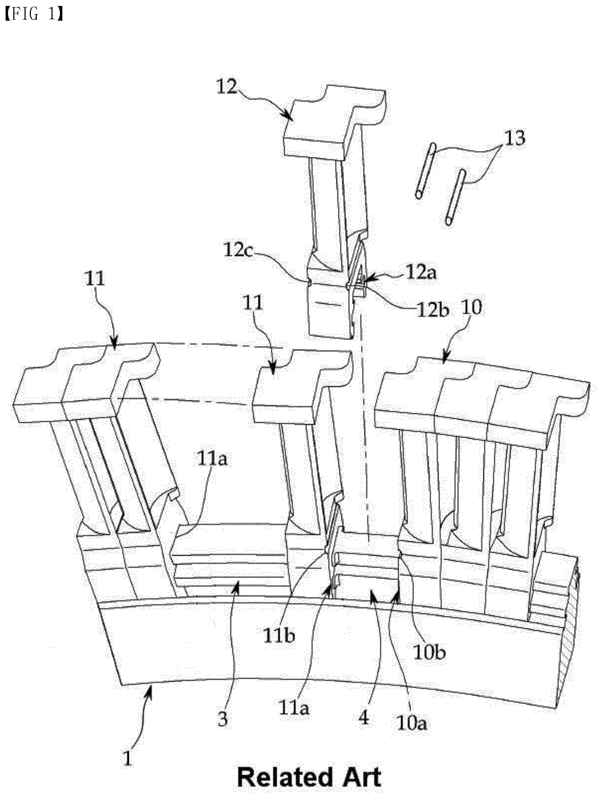

Referring to FIG. 1, a rotor 1 has the basic shape of a flat, circular plate, i.e., a disc. A tangential entry 4 providing passage for installing n buckets 10, 11, 12 is formed at a predetermined position in a circumferential portion of the rotor 1. A rotor dovetail tenon 3 for supporting the installed buckets 10 and 11 is provided on the circumferential portion of the rotor 1 and extends along a circumferential surface of the rotor 1, between opposite sides of the tangential entry 4, leaving a gap corresponding to the predetermined position of the tangential entry 4.

On the one hand, each of the n buckets 10, 11, 12 includes a root having a bucket dovetail mortise 10a, 11a, 12a capable of engaging with the rotor dovetail tenon 3, and a blade protruding from the root in the rotor's radial direction, whereby the first through (n-1)th buckets 10 through 11 are supported by the rotor dovetail tenon 3. On the other hand, the nth bucket 12 is supported by a pair of separately provided pins 13. That is, the nth bucket 12, which is a closer bucket that is last to be installed, is supported by a pair of separately provided pins 13, because the nth bucket 12 is merely inserted into the tangential entry 4.

In detail, a first groove 12b is formed in a first side surface of the root of the nth bucket 12, and a third groove 10b is formed in an opposing side surface of the root of the first bucket 10 that is adjacent to the nth bucket 12. The first and third grooves 12b and 10b are formed as recesses in the rotor's circumferential direction, and when combined, the opposing recesses form a first pin hole into which a first pin 13 is to be inserted. Meanwhile, a second groove 12c is formed in a second side surface of the root of the nth bucket 12, and a fourth groove 11b is formed in an opposing side surface of the root of the (n-1)th bucket 11 that is adjacent to the nth bucket 12. The second and fourth grooves 12c and 11b are, likewise, formed as recesses in the rotor's circumferential direction, and when combined, the opposing recesses a second pin hole into which a second pin 13 is to be inserted. In the foregoing configuration, one side of the nth bucket 12 is supported by the first bucket 10 through the first pin 13 inserted into the first pin hole, while the other side of the nth bucket 12 is supported by the (n-1)th bucket 11 through the second pin 13 inserted into the second pin hole.

The related art rotatable body having the above configuration is manufactured as follows.

The first through (n-1)th buckets 10 through 11 are successively coupled to the rotor 1 by individually inserting the first through (n-1)th buckets 10 through 11 into the tangential entry 4 and then sliding them in the rotor's circumferential direction along the rotor dovetail tenon 3 using the respective bucket dovetail mortises 10a through 11a of the buckets 10 through 11. Lastly, the nth bucket 12 is inserted into the tangential entry 4, and with the nth bucket 12 thus positioned, the first and second pins 13 are respectively inserted into the first and second pin holes.

However, in the above-described rotatable body and method of manufacturing the same according to the related art, the buckets are not stably coupled to the rotor. That is, because the nth bucket 12 is supported by the first (n-1)th buckets 10 and 11 rather than being supported by the rotor dovetail tenon 3, a significant amount of load is applied to each of a coupling portion between the first bucket 10 and the rotor 1 and a coupling portion between the (n-1)th bucket 11 and the rotor 1. These coupling portions may therefore be damaged by the applied load, such that the corresponding buckets may become unstably coupled, that is, loosened or separated from the rotor 1. A significant amount of load is also applied to the first pin 13, the first pin hole, the second pin 13, and the second pin hole, which may likewise be damaged, such that the associated buckets may similarly become unstably coupled to the rotor 1. In addition, the nth bucket 12 may become separated from the rotor 1 through an undesirable shifting in the rotor's axial direction. Furthermore, during operation of a steam turbine including a rotatable body according to the related art, the n buckets 10, 11, 12 may rotate relative to the rotor 1, that is, the buckets may collectively experience a shifting in the rotor's circumferential direction, in which case there is a reduction in efficiency.

US 2012/099999 A1 discloses an arrangement and a method for mounting articulated turbine buckets in axial entry slots of rotor wheels. A curvature on a vertical plane may be incorporated on an axial male dovetail projection of the bucket root and the associated axial female dovetail slot of the rotor wheel. The curvature facilitates loading of buckets otherwise precluded by interferences, such as interlocking tip shrouds on adjacent buckets. Such loading may be provided by locating the shroud tip shroud in proximity to an adjacent tip shroud and pivoting the root end of the bucket around the location of the tip shroud such that the arc formed by the bucket allows the curvature of the axial male dovetail projection to swing into the axial female dovetail slot of the rotor wheel. US 5 511 948 A discloses a rotor blade damping structure for axial-flow turbine and JP S61 129403 A discloses a coupling device for a turbine moving blade.

### SUMMARY OF THE INVENTION

An object of the present invention is to provide a rotatable body configured to enable a bucket to be stably coupled to a rotor, a method of manufacturing the rotatable body, and a steam turbine including the rotatable body.

Other objects and advantages of the present invention can be understood by the following description, and become apparent with reference to the embodiments of the present invention. Also, it is obvious to those skilled in the art to which the present invention pertains that the objects and advantages of the present invention can be realized by the means as claimed and combinations thereof.

In accordance with one aspect of the present invention, it is provided a rotatable body according to claim 1. Each of the n buckets of the rotatable body may include a bucket dovetail mortise for engaging with the unified annular dovetail tenon in order to couple the bucket to the rotor.

Each of the n buckets of the rotatable body may include a root including a bucket dovetail mortise to engage with a portion of the unified annular dovetail protrusion; and a blade protruding from the root in a radial direction of the rotor. With respect to the circumferential direction of the rotor, a length of the tangential entry, a length of the adapter dovetail tenon, a length of the root, and a length of the bucket dovetail mortise may be substantially identical lengths.

First to (n-1)th buckets may be inserted through the tangential entry and then slid in the circumferential direction of the rotor on the rotor dovetail tenon in order to successively assemble the first to (n-1)th buckets with the rotor wheel. An nth bucket may be assembled with the adapter and the adapter assembled with the nth bucket is inserted into the tangential entry in an axial direction of the rotor in order to assemble the nth bucket with the rotor wheel. The first to (n-1)th buckets assembled with the rotor wheel and the nth bucket assembled with the adapter are collectively moved to a predetermined position along the circumferential direction of the rotor, so that the (n-1)th bucket axially and radially overlaps a first junction between the rotor dovetail tenon and the adapter dovetail tenon, and the nth bucket axially and radially overlaps a second junction between the rotor dovetail tenon and the adapter dovetail tenon.

When a length of a bucket of the n buckets with respect to the circumferential direction of the rotor is one pitch, the predetermined position may be a position to which the first to (n-1)th buckets assembled with the rotor wheel and the nth bucket assembled with the adapter are collectively moved by one half pitch along the circumferential direction of the rotor.

The rotatable body may further include means for fixing the first to nth buckets in the predetermined position, wherein the fixing means comprises the rotor wheel, the adapter, and the n buckets.

The rotor wheel, the adapter, and the n buckets may be configured such that, when the n buckets are located in the predetermined position, the adapter moves outwards in a radial direction of the rotor to be caught by one or more buckets among the n buckets, thereby preventing the n buckets from moving in the circumferential direction of the rotor.

The rotor dovetail tenon may include an inner circumferential surface facing a rotational axis of the rotor; and an outer circumferential surface providing a rear surface of the inner circumferential surface. The adapter dovetail tenon may include an inner circumferential surface facing the rotational axis of the rotor; and an outer circumferential surface providing a rear surface of the inner circumferential surface. The bucket dovetail mortise may include a first inner circumferential surface facing the inner circumferential surface of the rotor dovetail tenon; a first outer circumferential surface facing the outer circumferential surface of the rotor dovetail tenon; a second inner circumferential surface facing the inner circumferential surface of the adapter dovetail tenon; and a second outer circumferential surface facing the outer circumferential surface of the adapter dovetail tenon.

A distance between the inner and outer circumferential surfaces of the rotor dovetail tenon, a distance between the first inner and outer circumferential surfaces of the bucket dovetail mortise, and a distance between the inner and outer circumferential surfaces of the adapter dovetail tenon may be substantially equal to each other and may be respectively smaller than a distance between the second inner and outer circumferential surfaces of the bucket dovetail mortise. A distance to the first inner circumferential surface of the bucket dovetail mortise from the rotational axis of the rotor may be substantial equal to a distance to the second inner circumferential surface of the bucket dovetail mortise from the rotational axis of the rotor, and a distance to the second outer circumferential surface of the bucket dovetail mortise from the rotational axis of the rotor may be greater than a distance to the first outer circumferential surface of the bucket dovetail mortise from the rotational axis of the rotor.

When the n buckets move in the circumferential direction of the rotor, the adapter may be moved inwards in the radial direction of the rotor, so that the inner circumferential surface of the adapter dovetail tenon comes into contact with the second inner circumferential surface of the bucket dovetail mortise and so that the outer circumferential surface of the adapter dovetail tenon is substantially coplanar with the first outer circumferential surface of the bucket dovetail mortise, thereby preventing the adapter dovetail tenon from being caught by a stepped portion between the first and second outer circumferential surface of the bucket dovetail mortise. When the n are located in the predetermined position, the adapter may be moved outwards in the radial direction of the rotor, so that the inner circumferential surface of the adapter dovetail tenon is spaced apart from the second inner circumferential surface of the bucket dovetail mortise and so that the outer circumferential surface of the adapter dovetail tenon occupies a different plane from the first outer circumferential surface of the bucket dovetail mortise, thereby causing the adapter dovetail tenon to be caught by the stepped portion between the first and second outer circumferential surfaces of the bucket dovetail mortise.

According to another aspect of the present invention, a steam turbine according to claim 11 is provided.

According to another aspect of the present invention, there is provided a method of manufacturing a rotatable body according to claim 12.

It is to be understood that both the foregoing general description and the following detailed description of the present invention are exemplary and explanatory and are intended to provide further explanation of the invention as claimed.

### BRIEF DESCRIPTION OF THE DRAWINGS

The above and other objects, features and advantages of the present invention will be more clearly understood from the following detailed description when taken in conjunction with the accompanying drawings, in which:
FIG. 1 is a perspective view of a portion of a rotatable body according to a related art;
FIG. 2 is a partially cutaway, front view of a steam turbine including a rotatable body in accordance with an embodiment of the present invention;
FIG. 3 is a flowchart of a method of manufacturing the rotatable body of FIG. 2;

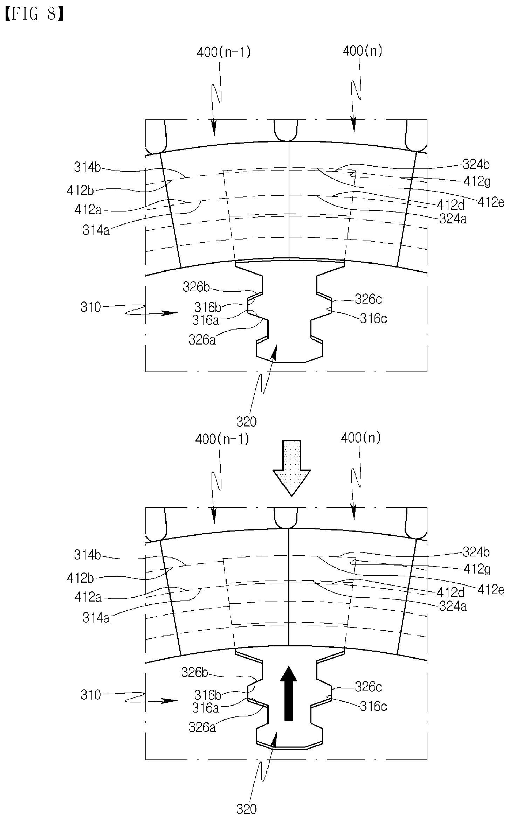

FIGS. 4-8 are views of portions of the rotatable body of FIG. 2 for illustrating steps S2-S6 of FIG. 3, respectively;

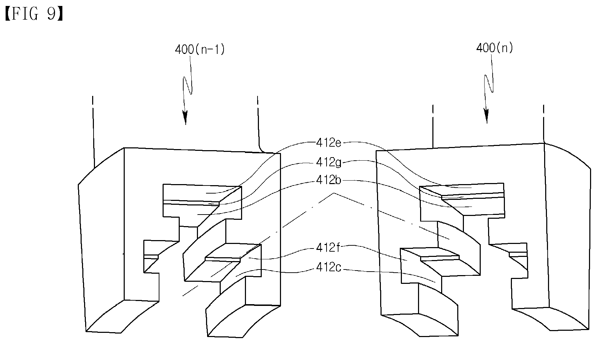

FIG. 9 is an exploded perspective view of a portion of each of the (n-1)th and nth buckets of FIG. 2; and

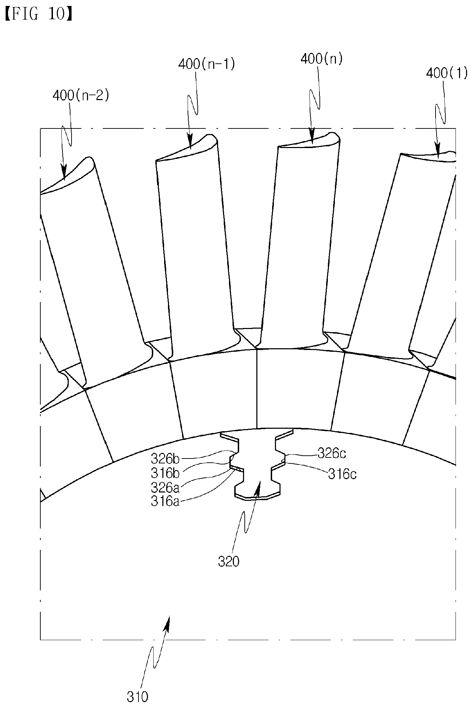

FIG. 10 is a perspective view illustrating a rotatable body manufactured by the rotatable body manufacturing method illustrated in FIG. 3.

### DETAILED DESCRIPTION OF THE INVENTION

Hereinafter, a rotatable body, a method of manufacturing the same, and a steam turbine including the same according to the present invention will be described in detail with reference to the accompanying drawings.

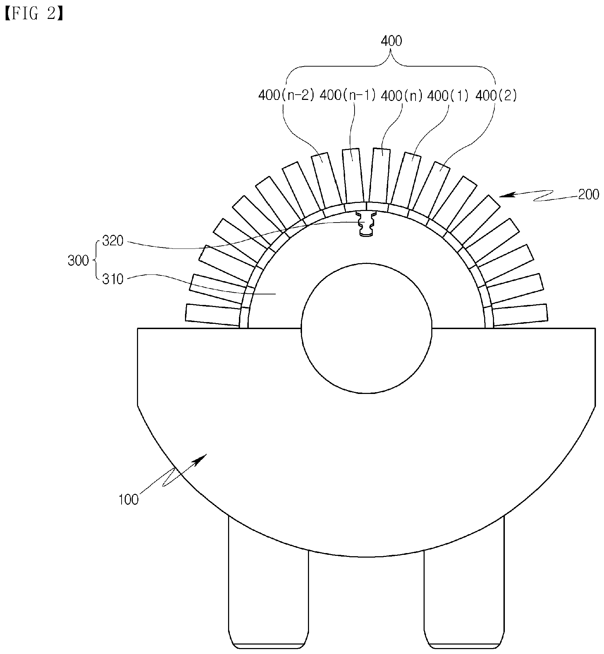

Referring to FIG. 2, the steam turbine of the present invention may include a rotatable body 200 in accordance with an embodiment of the present invention; a casing 100 forming the turbine's outer appearance and frame, in which the rotatable body 200 is rotatably installed; and a nozzle (not shown) configured to discharge steam toward the rotatable body 200. The rotatable body 200 may include a rotor 300 provided to be rotatable, and a number (n) of buckets 400 coupled to the rotor 300 and configured to convert the energy of flowing steam discharged from the nozzle into mechanical work. The n buckets 400, the buckets 400(1) through 400(n), may be coupled to the rotor 300 in a so-called tangential entry manner. Each of the n buckets 400 may be formed to be supported by the rotor 300.

The rotor 300 may include a rotor wheel 310 and an adapter 320 coupled to the rotor wheel 310 in order to couple the closer bucket to the rotor 300. With the adapter 320 coupled to the rotor wheel 310, the rotor 300 may take on a disc shape.

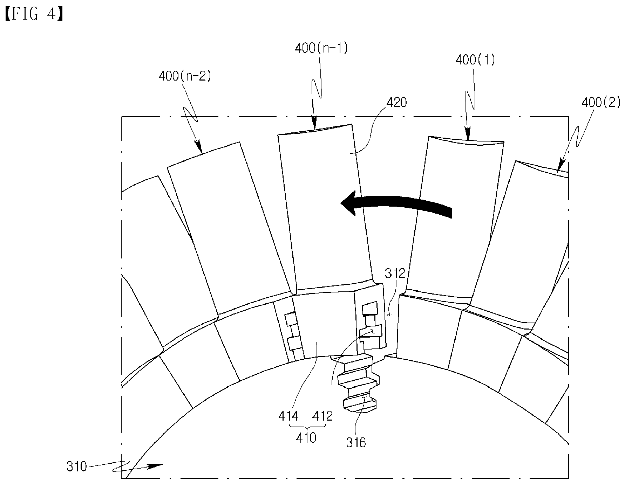

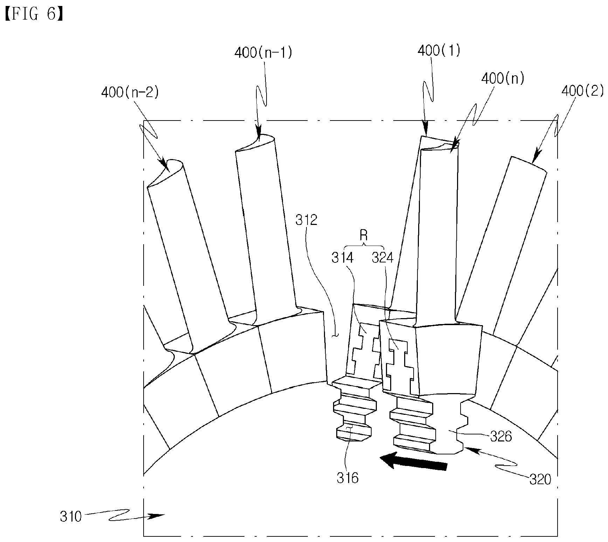

As shown in FIGS. 4 and 6, a tangential entry 312 may occupy a position on the circumference of the rotor wheel 310 and may function as a slot to be filled with the adapter 320 and as an access point for the coupling of the buckets 400 to the rotor 300. Thus, the buckets 400 can be individually inserted into the tangential entry 312 in order to be coupled, one by one, to the rotor wheel 310 of the rotor 300.

The rotor wheel 310 may include a rotor dovetail tenon 314, occupying the majority of a circumferential surface of the rotor wheel 310 and protruding radially from the surface, and an axial dovetail mortise 316 formed as a recess to coincide with the position of the tangential entry 312. Thus, the rotor dovetail tenon 314 may extend, in a circumferential direction, from one side of the tangential entry 312 back around to the other side of the tangential entry 312, leaving a gap in the rotor dovetail tenon 314. The axial dovetail mortise 316 is effectively formed under the tangential entry 312 and may be recessed with respect to a radial direction (inward) of the rotor 300 and may extend in an axial direction (thickness) of the rotor 300.
As described above, the tangential entry 312 is a space functioning as the entrance for the buckets 400 to allow the buckets 400 to be coupled to the rotor 300 in an insertion manner along the circumferential direction. In order to allow insertion of each bucket 400 into the tangential entry 312, a circumferential length (arc) of the tangential entry 312 may be equal to or substantially equal to the width of one bucket 400 in the circumferential direction. Hereinafter, the terms "circumferential direction," "axial direction," and "radial direction" will respectively refer to the corresponding directions of the rotor 300.

Although the tangential entry 312 may have a size enabling multiple buckets 400 to simultaneously enter the tangential entry 312, it may be preferable that, as shown in the present embodiment, the tangential entry 312 have a size enabling only one bucket 400 at a time to enter the tangential entry 312, so as to minimize the size of the gap in the rotor dovetail tenon 314 that is formed by the tangential entry 312.

The rotor dovetail tenon 314, along with an adapter dovetail tenon 324 to be described below, may form a unified annular dovetail tenon R (FIG. 6) protruding radially from the circumferential surface of the rotor 300. The unified annular dovetail tenon R operates in conjunction with a bucket dovetail mortise 412 to be described below. Here, when the buckets 400 move in the circumferential direction, along the circumferential surface of the rotor 300, the unified annular dovetail tenon R and the bucket dovetail mortise 412 may function to guide movement of the buckets 400 in the circumferential direction. In addition, the unified annular dovetail tenon R and the bucket dovetail mortise 412 may function to support the buckets 400 and to prevent the buckets 400 from axially or radially separating from the rotor 300. The shape of a cross-section of the rotor dovetail tenon 314, taken perpendicularly to the circumferential direction, may be constant all along the circumference of the rotor 300, thus allowing each bucket 400 inserted through the tangential entry 312 to be moved in the circumferential direction. In order to prevent each bucket 400 coupled to the rotor dovetail tenon 314 from being separated from the rotor dovetail tenon 314 in the radial direction, the rotor dovetail tenon 314 may include at least one projection protruding in the axial direction and at least one depression recessed in the axial direction.

The axial dovetail mortise 316 operates in conjunction with an axial dovetail tenon 326 to be described below. The axial dovetail mortise 316 and the axial dovetail tenon 326 may function to allow the adapter 320 to be moved in the axial direction (insertion, extraction) and to be coupled to the rotor wheel 310. In addition, the axial dovetail mortise 316 and the axial dovetail tenon 326 may function to support the adapter 320 and to prevent the adapter 320 from being radially separated from the rotor wheel 310 and from moving with respect to the circumferential direction. The shape of a cross-section of the axial dovetail mortise 316, taken perpendicularly to the axial direction, may be constant along the axial direction, thus allowing an axial dovetail tenon 326 (to be described later) of the adapter 320 to be inserted into the axial dovetail mortise 316 and the adapter 320 to be moved in the axial direction. In order to prevent the adapter 320 coupled to the axial dovetail mortise 316 from being separated from the axial dovetail mortise 316 in the radial direction, the axial dovetail mortise 316 may include at least one projection protruding in the circumferential direction and at least one depression recessed in the circumferential direction.

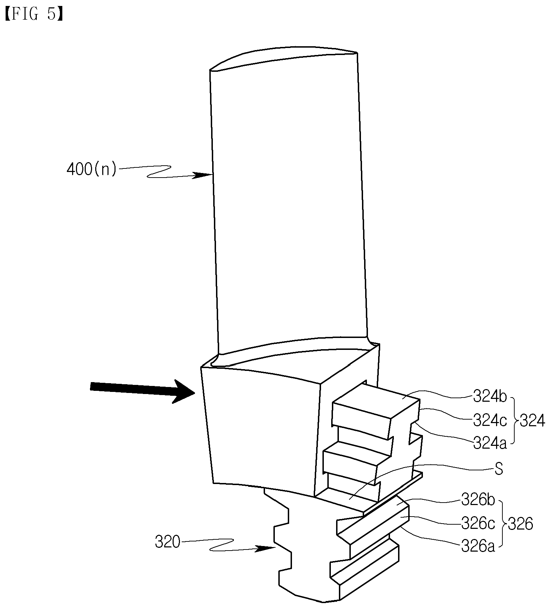

The adapter 320 may include the adapter dovetail tenon 324 and the axial dovetail tenon 326, which, as described above, engages with the axial dovetail mortise 316. The adapter dovetail tenon 324 protrudes axially from a surface S of the adapter 320 (FIG. 5) and fills the gap in the rotor dovetail tenon 314. Moreover, together with a corresponding bucket 400, the adapter dovetail tenon 324 also fills the tangential entry 312. In other words, the adapter dovetail tenon 324 may have a circumferential length equivalent to that of the tangential entry 312.

The surface S of the adapter 320 is consistent with the circumferential surface of the rotor wheel 310 on which the rotor dovetail tenon 314 is formed. Combined with the surface S, the circumferential surface of the rotor wheel 310 coincides with the circumferential surface of the rotor wheel 310 on which the unified annular dovetail tenon R is formed.

As described above, the adapter dovetail tenon 324 may complete the unified annular dovetail tenon R along with the rotor dovetail tenon 314. That is, as in the case of the rotor dovetail tenon 314, the shape of a cross-section of the adapter dovetail tenon 324, taken perpendicularly to the circumferential direction, may be constant in the circumferential direction, thus allowing the buckets 400 to be moved in the circumferential direction. Further, also as in the case of the rotor dovetail tenon 314, in order to prevent the buckets 400 coupled to the adapter dovetail tenon 324 from being separated from the adapter dovetail tenon 324 in the radial direction, the adapter dovetail tenon 324 may include at least one projection protruding in the axial direction and at least one depression recessed in the axial direction. In other words, the adapter dovetail tenon 324 may include projections and recesses in the same manner as in the case of the rotor dovetail tenon 314, thus supporting at least one bucket 400 of the n buckets 400.

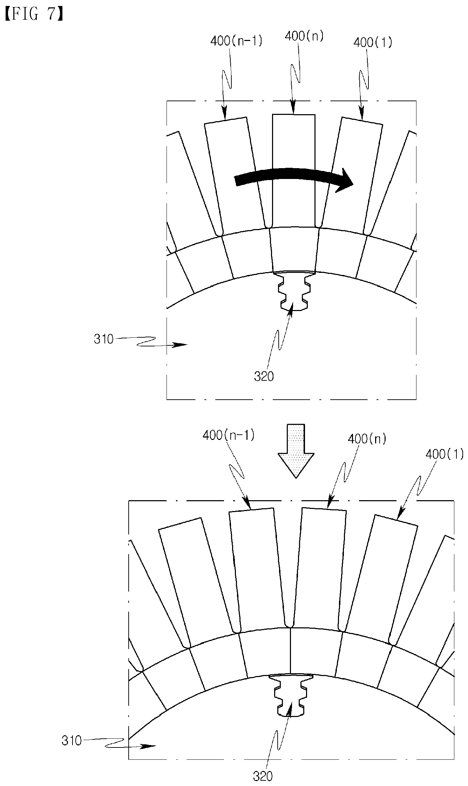

As shown in the present embodiment, and exemplified in FIG. 7, in the case where the n buckets 400 are collectively moved by one half pitch, the adapter dovetail tenon 324 may support a portion of an (n-1)th bucket 400(n-1) and a portion of an nth bucket 400n, i.e., the closer bucket. Before the n buckets 400 are collectively moved, the adapter dovetail tenon 324 may support one bucket 400 of the n buckets 400, namely, the nth bucket 400n.

To allow the axial dovetail tenon 326 to engage with the axial dovetail mortise 316, the shape of a cross-section of the axial dovetail tenon 326, taken perpendicularly to the axial direction, may be constant in the axial direction, and the axial dovetail tenon 326 may include at least one projection protruding in the circumferential direction and at least one depression recessed in the circumferential direction.

Each of the n buckets 400 may include a root 410 which is coupled to the rotor 300, and a blade 420 which protrudes from the root 410 in the rotational radial direction. The root 410 may include the bucket dovetail mortise 412 and a platform 414 (FIG. 4) encasing the bucket dovetail mortise 412. The bucket dovetail mortise 412 engages with a portion of the unified annular dovetail tenon R, and the platform 414 defines the outer appearance of the root 410. The bucket dovetail mortise 412 may have a circumferential length equivalent to that of the root 410.

To allow the bucket dovetail mortise 412 to engage with the unified annular dovetail tenon R, the shape of a cross-section of the bucket dovetail mortise 412, taken perpendicularly to the circumferential direction, may be constant in the circumferential direction, and the bucket dovetail mortise 412 may include at least one projection protruding in the axial direction and at least one depression recessed in the axial direction.

The rotatable body 200 in accordance with the present embodiment may be manufactured by the following method, to prevent axial movement of the adapter 320 and a bucket 400 supported on the adapter 320 and their becoming separated from the rotor wheel 310 and buckets 400 supported on the rotor wheel 310.

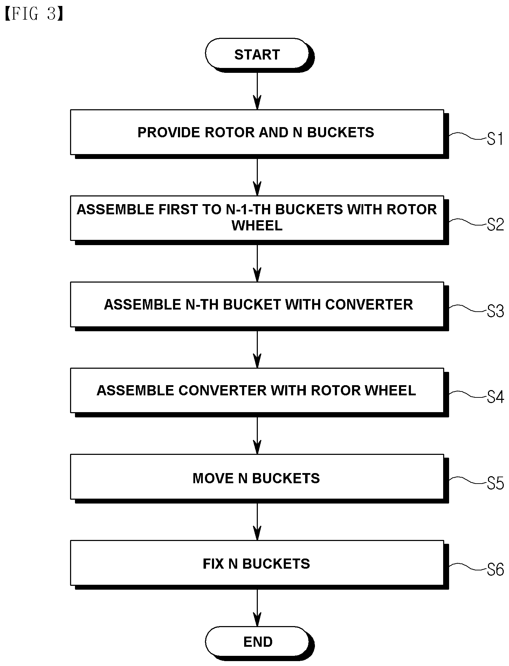

Referring to FIG. 3, the rotatable body 200 may be manufactured by a method including a first step S1 of providing the rotor 300 and the n buckets 400; a second step S2 of assembling first to (n-1)th buckets 400(1) to 400(n-1) with the rotor wheel 310; a third step S3 of assembling the nth bucket 400n with the adapter 320; a fourth step S4 of assembling the adapter 320 with the rotor wheel 310; and a fifth step S5 of moving the n buckets 400 in the circumferential direction.

In detail, a bucket 400 to be finally assembled among the n buckets 400 is referred to as the nth bucket 400n, a bucket 400 adjacent to the nth bucket 400n is referred to as the first bucket 400(1), and the other buckets 400 are respectively referred to as second to (n-1)th buckets 400(2) to 400(n-1) in a sequence from the first bucket 400(1) to the nth bucket 400n along the circumferential direction. At the steps S1 and S2, the first to (n-1)th buckets 400(1) to 400(n-1) may be successively assembled with the rotor wheel 310 by inserting the first to (n-1)th buckets 400(1) to 400(n-1) in the circumferential direction by way of the tangential entry 312, the rotor dovetail tenon 314, and the bucket dovetail mortise 412.

Thereafter, at the step S3, the nth bucket 400n may be assembled with the adapter 320 using the bucket dovetail mortise 412 of the nth bucket 400n and the adapter dovetail tenon 324 of the adapter 320.

Subsequently, at the step S4, the adapter 320 assembled with the nth bucket 400n may be assembled, by inserting the adapter 320 into the tangential entry 312 in the axial direction, with the rotor wheel 310 assembled with the first to (n-1)th buckets 400(1) to 400(n-1). In other words, when the axial dovetail tenon 326 is inserted into the axial dovetail mortise 316, the adapter dovetail tenon 324 is inserted into the tangential entry 312, thus forming the unified annular dovetail tenon R along with the rotor dovetail tenon 314. In addition, the nth bucket 400n that has engaged with the adapter dovetail tenon 324 is interposed between the first bucket 400(1) and the (n-1)th bucket 400(n-1).

Thereafter, at the step S5, the first to (n-1)th buckets 400(1) to 400(n-1) assembled with the rotor wheel 310 and the nth bucket 400n assembled with the adapter 320 may be collectively moved to a predetermined position along the circumferential direction.

Here, the predetermined position may be a position at which the root 410 of a specific bucket 400 of the n buckets 400 overlaps one junction between the rotor dovetail tenon 314 and the adapter dovetail tenon 324 and at which the root 410 of a bucket 400 adjacent to the specific bucket 400 overlaps the other junction between the rotor dovetail tenon 314 and the adapter dovetail tenon 324, with respect to the axial and radial directions.

In other words, if the circumferential length of the root 410 corresponds to one pitch, as described in the present embodiment, the predetermined position may be a position at which, by collectively moving the first to (n-1)th buckets 400(1) to 400(n-1) assembled with the rotor wheel 310 and the nth bucket 400n assembled with the adapter 320 by one half pitch in the circumferential direction, a central portion of the (n-1)th bucket 400(n-1) axially and radially overlaps one junction between the rotor dovetail tenon 314 and the adapter dovetail tenon 324, while a central portion of the nth bucket 400n axially and radially overlaps the other junction between the rotor dovetail tenon 314 and the adapter dovetail tenon 324.

Although the n buckets 400 are disposed at the predetermined position as the rotatable body 200 are formed through the steps S1 to S5, the n buckets 400 may be undesirably moved in the circumferential direction and become displaced from the predetermined position, for example, because of operation of the steam turbine. That is, the junctions between the rotor dovetail tenon 314 and the adapter dovetail tenon 324 may be respectively aligned with side surfaces of the root 410 of any bucket 400 among the n buckets 400 in the axial and radial directions. Thereby, the adapter 320 and the bucket 400 supported on the adapter 320 may be moved in the axial direction and become separated from the rotor wheel 310 and the other buckets 400 supported on the rotor wheel 310.

Given this, the rotatable body 200 in accordance with the present embodiment may further include a fixing unit for fixing the n buckets 400 at the predetermined position.

The fixing means may be comprised of the rotor wheel 310, the adapter 320, and the n buckets 400, instead of using separate components.

Specifically, the rotor wheel 310, the adapter 320, and the n buckets 400 may be configured such that, when the n buckets 400 are located in the predetermined position, the adapter 320 moves outwards in the radial direction to be caught by any bucket of the n buckets 400, thereby preventing the n buckets 400 from moving in the circumferential direction.

More specifically, first, the axial dovetail tenon 326 of the adapter 320 and the axial dovetail mortise 316 of the rotor wheel 310 may be configured such that the axial dovetail tenon 326 is movable in the radial direction when the axial dovetail tenon 326 and the axial dovetail mortise 316 are meshed.

That is, the axial dovetail tenon 326 may include inner circumferential surfaces 326a facing the rotational axis of the rotor 300, outer circumferential surfaces 326b forming rear surfaces of the inner circumferential surfaces 326a, and side surfaces 326c connecting the inner circumferential surfaces 326a and the outer circumferential surfaces 326b.

The axial dovetail mortise 316 may include inner circumferential surfaces 316a facing the inner circumferential surfaces 326a of the axial dovetail tenon 326, outer circumferential surfaces 316b facing the outer circumferential surfaces 326b of the axial dovetail tenon 326, and side surfaces 316c facing the side surfaces 326c of the axial dovetail tenon 326.

The distances between the inner circumferential surfaces 316a and the outer circumferential surfaces 316b of the axial dovetail mortise 316 may be greater than the distances between the inner circumferential surfaces 326a and the outer circumferential surfaces 326b of the axial dovetail tenon 326.

In addition, the side surfaces 316c of the axial dovetail mortise 316 and the side surfaces 326c of the axial dovetail tenon 326 may extend in the radial direction.

Afterwards, in a position in which the annular dovetail tenon R of the rotor 300 and the bucket dovetail mortise 412 of the bucket 400 are meshed, the adapter dovetail tenon 324 of the adapter 320 may be provided to be movable in the radial direction.

Specifically, the rotor dovetail tenon 314 may include inner circumferential surfaces 314a facing the rotational axis of the rotor 300, outer circumferential surfaces 314b forming rear surfaces of the inner circumferential surfaces 314a, and side surfaces connecting the inner circumferential surfaces 314a and the outer circumferential surfaces 314b.

The adapter dovetail tenon 324 may include inner circumferential surfaces 324a facing the rotational axis of the rotor 300, outer circumferential surfaces 324b forming rear surfaces of the inner circumferential surfaces 324a, and side surfaces 324c connecting the inner circumferential surfaces 324a and the outer circumferential surfaces 324b.

The bucket dovetail mortise 412 may include first inner circumferential surfaces 412a facing the inner circumferences 314a of the rotor dovetail tenon 314, first outer circumferential surfaces 412b facing the outer circumferential surfaces 314b of the rotor dovetail tenon 314, first side surfaces 412c facing the side surfaces 314c of the rotor dovetail tenon 314, second inner circumferential surfaces 412d facing the inner circumferential surfaces 324a of the adapter dovetail tenon 324, second outer circumferential surfaces 412e facing the outer circumferential surfaces 324b of the adapter dovetail tenon 324, and side surfaces 412f facing the side surfaces 324c of the adapter dovetail tenon 324.

The first inner circumferential surfaces 412a, the first outer circumferential surfaces 412b, and the first side surfaces 412c of the bucket dovetail mortise 412 may be provided to match the n buckets 400, while the second inner circumferential surfaces 412d, the second outer circumferential surfaces 412e, and the second side surfaces 412f of the bucket dovetail mortise 412 may be provided to match the (n-1)th bucket 400(n-1) and the nth bucket 400n.

That is, the bucket dovetail mortise 412 of each of the first bucket 400(1) to the (n-2)th bucket 400(n-2) may include the first inner circumferential surfaces 412a, the first outer circumferential surfaces 412b, and the first side surfaces 412c. In contrast, the bucket dovetail mortise 412 of each of the (n-1)th bucket 400(n-1) and the nth bucket 400n may include the first inner circumferential surfaces 412a, the first outer circumferential surfaces 412b, the first side surfaces 412c, the second inner circumferential surfaces 412d, the second outer circumferential surfaces 412e, and the second side surfaces 412f.

Here, the first inner circumferential surfaces 412a, the first outer circumferential surfaces 412b, and the first side surfaces 412c of the bucket dovetail mortise 412 of the (n-1)th bucket 400(n-1) may extend to the first inner circumferential surfaces 412a, the first outer circumferential surfaces 412b, and the first side surfaces 412c of the bucket dovetail mortise 412 of the (n-2)th bucket 400(n-2), respectively. In addition, the first inner circumferential surfaces 412a, the first outer circumferential surfaces 412b, and the first side surfaces 412c of the bucket dovetail mortise 412 of the nth bucket 400n may extend to the first inner circumferential surfaces 412a, the first outer circumferential surfaces 412b, and the first side surfaces 412c of the bucket dovetail mortise 412 of the first bucket 400(1), respectively. Furthermore, the second inner circumferential surfaces 412d, the second outer circumferential surfaces 412e, and the second side surfaces 412f of the bucket dovetail mortise 412 of the (n-1)th bucket 400(n-1) may extend to the second inner circumferential surfaces 412d, the second outer circumferential surfaces 412e, and the second side surfaces 412f of the bucket dovetail mortise 412 of the nth bucket 400n, respectively.

Here, the distances between the inner circumferential surfaces 314a and the outer circumferential surfaces 314b of the rotor dovetail tenon 314, the distances between the first inner circumferential surfaces 412a and the first outer circumferential surfaces 412b of the bucket dovetail mortise 412, and the distances between the inner circumferential surfaces 324a and the outer circumferential surfaces 324b of the adapter dovetail tenon 324 may be the same or substantially the same as each other, and may be smaller than the distances between the second inner circumferential surfaces 412d and the second outer circumferential surfaces 412e of the bucket dovetail mortise 412.

Specifically, the distances to the first inner circumferential surfaces 412a of the bucket dovetail mortise 412 from the rotational axis of the rotor 300 may be determined to be the same or substantially the same as the distances to the second inner circumferential surfaces 412d of the bucket dovetail mortise 412, such that each of the first inner circumferential surfaces 412a of the bucket dovetail mortise 412 is flush with a corresponding second inner circumferential surface of the second inner circumferential surfaces 412d of the bucket dovetail mortise 412. In contrast, the distances to the second outer circumferential surfaces 412e of the bucket dovetail mortise 412 from the rotational axis of the rotor 300 may be determined to greater than the distances to the first outer circumferential surfaces 412b of the bucket dovetail mortise 412 from the rotational axis of the rotor 300, such that the first outer circumferential surfaces 412b of the bucket dovetail mortise 412 is stepped from the second outer circumferential surfaces 412e of the bucket dovetail mortise 412.

In addition, each of the side surfaces of the rotor dovetail tenon 314, the first side surfaces 412c of the bucket dovetail mortise 412, the side surfaces 324c of the adapter dovetail tenon 324, and the second side surfaces 412f of the bucket dovetail mortise 412 may extend in the radial direction.

According to the above-described configuration, the second outer circumferential surfaces 412e, the second inner circumferential surfaces 412d, and the second side surfaces 412f of the bucket dovetail mortise 412 may define a space in which the adapter dovetail tenon 324 can move in the radial direction.

Here, the rotatable body manufacturing method according to the present embodiment may further include, after the step S5, a sixth step S6 of fixing the n buckets 400 by moving the adapter 320 outwards in the radial direction.

Specifically, in the rotatable body 200 according to the present embodiment, the adapter dovetail tenon 324 can accommodated within the space when the n buckets 400 are located in the predetermined position in the step S5. As the adapter dovetail tenon 324 is caught by stepped portions 412g between the outer circumferential surfaces 314b of the first circumferential dovetail protrusion 314 and the second outer circumferential surfaces 412e of the bucket dovetail mortises 412, in response to the adapter 320 being moved outwards in the radial direction, in the step S6, the n buckets 400 can be fixed in the predetermined position.

Hereinafter, the operations and effects of the rotatable body, the method of manufacturing the same, and the steam turbine including the same according to the present embodiment will be described.

Specifically, the nozzles (not shown) projects steam onto the n buckets 400 in the axial direction, and then the stem pass through the buckets 400 while being redirected by the buckets 400.

At this time, the steam applies an impulse to the buckets 400, so that the buckets 400 can rotate together with the rotor 300 in the circumferential direction, thereby converting energy extracted from steam into mechanical energy.
In the rotatable body, the method of manufacturing the same, and the steam turbine including the same according to the present embodiment, all of the n buckets 400 may be stably coupled to the rotor 300, in particular, using a tangential entry system. Specifically, in a position in which the first bucket 400(1) to the (n-1)th bucket 400(n-1) are connected to the rotor wheel 310, the nth bucket 400n is introduced into the tangential entry 312, and all of the n buckets 400 have moved in the circumferential direction to be located in the predetermined position, so that portions of the tangential entry 312 overlap portions of a specific bucket (e.g. the (n-1)th bucket 400(n-1)) among the n buckets 400 in the axial direction and radial direction while the remaining portions of the tangential entry 312 overlap portions of a bucket (e.g., the nth bucket 400n), among the n buckets 400, adjacent to the specific bucket, in the axial direction and radial direction. Consequently, even if a portion of the specific bucket 400 (e.g., the (n-1)th bucket 400(n-1)) is supported by the rotor dovetail tenon 314, and even if a portion of the adjacent bucket 400 (e.g., the nth bucket 400n) is supported by the rotor dovetail tenon 314, a significant load can be prevented from being concentrated on a specific dovetail portion, the dovetail can be prevented from being damaged by the concentration of the load, and the buckets 400 can be prevented from being dislodged from the rotor 300 due to the damage in the dovetail.

In addition, since all of the n buckets 400 are located in the predetermined position by moving in the circumferential direction by the steps S3 to S5, the adapter 320 and the buckets 400 can be prevented from being dislodged in the axial or radial direction, so that the n buckets 400 can be more stably coupled to the rotor 300.

In addition, since the n buckets 400 are fixed in the predetermined position in the step S6, the n buckets 400 can be prevented from being dislodged from the predetermined position. Consequently, the n buckets 400 can be more stably coupled to the rotor 300. It is also possible to prevent the problem of low efficiency, which would otherwise be caused by insufficient conversion of steam energy into mechanical work, due to increases in the rotation of the n buckets 400 with respect to the rotor in the circumferential direction during operations.

In addition, the n buckets 400 are fixed in the predetermined position due to the rotor wheel 310, the adapter 320, and the buckets 400, instead of using separate components, in the step S6. Consequently, it is possible to reduce the number of components, the weight, and the manufacturing costs of the rotatable body 200 and the steam turbine including the same. According to the present embodiment, spaces are defined between the adapter 320 and the rotor wheel 310 and between the adapter 320 and the buckets 400, such that the adapter 320 can reciprocally move in the radial direction depending on the operating conditions of the steam turbine. Specifically, in a stopped position, the adapter 320 is moved inwards in the radial direction due to gravity or the like, so that the inner circumferential surfaces 324a of the adapter dovetail tenon 324 come into contact with the second inner circumferential surfaces 412d of the bucket dovetail mortise 412, the outer circumferential surfaces 324b of the adapter dovetail tenon 324 loose contact with the second outer circumferential surfaces 412e of the bucket dovetail mortise 412, and the outer circumferential surfaces 324b of the adapter dovetail tenon 324 are located coplanar with the first outer circumferential surfaces 412b of the bucket dovetail mortise 412. Consequently, the n buckets 400 can be released from the fixed position. In contrast, during operating, the adapter 320 is moved outwards in the radial direction, so that the inner circumferential surfaces 324a of the adapter dovetail tenon 324 are spaced apart from the second inner circumferential surfaces 412d of the bucket dovetail mortise 412, the outer circumferential surfaces 324b of the adapter dovetail tenon 324 come into contact with the second outer circumferential surfaces 412e of the bucket dovetail mortise 412, and the outer circumferential surfaces 324b of the adapter dovetail tenon 324 are located on the other surfaces from the first outer circumferential surfaces 412b of the bucket dovetail mortise 412 (i.e., the surfaces farther from the center of rotation of the rotor 300). Consequently, the n buckets 400 can be fixed in the predetermined position. However, the present invention is not limited thereto, and the rotatable body may be configured such that the adapter 320 is press-fitted into one of the rotor wheel 310 and the buckets 400. That is, the adapter 320 may be configured to be moved outwards in the radial direction to maintain the n buckets 400 to be fixed in the predetermined position, regardless of the operating state of the steam turbine. In this case, substantially the same operation and effect with insignificant differences may be obtained; i.e., the adapter 320 is movable in the radial direction, so that the n buckets 400 are fixed by the adapter 320. However, in this case, although residual stress due to press fitting is present, collision between the adapter 320 and the rotor wheel 310 and collision between the adapter 320 and the buckets 400 can be prevented, and noise and vibration can be reduced.

In addition, according to the present embodiment, the adapter 320, including the axial dovetail mortise 316 and the axial dovetail tenon 326, can be attached to and detached from the rotor wheel 310 by moving in the axial direction. The adapter 320 can be prevented from being dislodged from the rotor wheel 310 in the circumferential or radial direction. However, the present embodiment is not limited thereto, and although not shown, neither the axial dovetail mortise 316 nor the axial dovetail tenon 326 may be provided. In this case, the operation and effect, regarding the n buckets 400 being supported by the rotor 300, may be substantially the same and be insignificantly different from those of the present embodiment. However, in this case, the adapter 320 may be easily connected to and disconnected from the rotor wheel 310, since the adapter 320 is attachable to and detachable from the rotor wheel 310 by moving not only in the axial direction but also in the radial direction.

In addition, according to the present embodiment, the n buckets 400 are moved by half pitches in the step S5. However, the present embodiment is not limited thereto.

Specifically, the predetermined position may be a position at which all of the buckets, including the first bucket 400(1) to the (n-1)th bucket 400(n-1) connected to the rotor wheel 310 and the nth bucket 400n connected to the adapter 320, have arrived by moving distances greater than zero pitches and smaller than one half pitch, or distances greater than one half pitch and smaller than one pitch, in the circumferential direction. Consequently, a contact portion between the rotor dovetail tenon 314 and the adapter dovetail tenon 324 may overlap the (n-1)th bucket 400(n-1), more particularly, portions of the (n-1)th bucket 400(n-1) offset from the central portion of the (n-1)th bucket 400(n-1), in the axial direction and radial direction. In addition, the remaining contact portion between the rotor dovetail tenon 314 and the adapter dovetail tenon 324 may overlap the nth bucket 400n, more particularly, portions of the nth bucket 400n offset from the center portions of the nth bucket 400n in the axial direction and radial direction. In this case, the operation and effect, regarding the adapter 320 and the buckets 400 being prevented from being disconnected in the axial direction, may be substantially the same as and be insignificantly different from those of the present embodiment. However, this case may be disadvantageous in terms of a stress-related design.

Alternatively, the predetermined position may be a position at which all of the buckets, including the first bucket 400(1) to the (n-1)th bucket 400(n-1) connected to the rotor wheel 310 and the nth bucket 400n connected to the adapter 320, have arrived by moving distances greater than one pitch. For example, in the predetermined position, a contact portion between the rotor dovetail tenon 314 and the adapter dovetail tenon 324 overlaps the (n-2)th bucket 400(n-2) in the axial direction and radial direction, and the remaining contact portion between the rotor dovetail tenon 314 and the adapter dovetail tenon 324 overlaps the (n-1)th bucket 400(n-1) in the axial direction and radial direction. In this case, the operation and effect, regarding the adapter 320 and the buckets 400 being prevented from being disconnected in the axial direction, may be substantially the same as and be insignificantly different from those of the present embodiment. However, in this case, the n buckets 400 must be moved significant distances, thereby significantly increasing time and costs consumed in manufacture.

To understand the technique better, as an example of the technique, the dovetail tenons and the dovetail mortises may be provided in a reversed manner.

Specifically, the rotor 300 may be provided with a first bucket dovetail mortise and a second bucket dovetail mortise instead of the rotor dovetail tenon 314 and the adapter dovetail tenon 324, while the root 410 of each of the buckets 400 may be provided with a circumferential dovetail tenon instead of the bucket dovetail mortise 412.

In addition, the rotor wheel 310 may be provided with an axial dovetail tenon instead of the axial dovetail mortise 316, while the adapter 320 may be provided with an axial dovetail mortise instead of the axial dovetail tenon 326.

## Claims

1. A rotatable body (300, 400) comprising:
a rotor (300); and
n buckets (400) for converting energy of flowing steam into mechanical work, each bucket (400) configured to be coupled to the rotor (300) in a tangential entry manner,
wherein the rotor (300) is configured to support each of the n buckets (400) coupled to the rotor (300),
wherein the rotor (300) comprises:
a rotor wheel (310) having a circumferential surface on which a tangential entry (312) is provided and comprising a rotor dovetail tenon (314) extending in a circumferential direction of the rotor (300) from one side of the tangential entry (312) to the other side of the tangential entry (312), the rotor dovetail tenon (314) having a gap at the tangential entry (312), and
an adapter (320) configured to couple an nth bucket (400(n)) of the n buckets (400) to the rotor (300) and comprising an axial dovetail tenon (326) and an adapter dovetail tenon (324) configured to fill the gap in the rotor dovetail tenon (314) when the nth bucket (400(n)) is coupled to the rotor (300) such that the rotor dovetail tenon (314) and the adapter dovetail tenon (324) form a unified annular dovetail protrusion (R) protruding radially from a circumferential surface of the rotor (300),
wherein the rotor wheel (310) further includes an axial dovetail mortise (316) extending in an axial direction of the rotor (300) and formed under the tangential entry (312), and wherein the axial dovetail mortise (316) is configured to receive the axial dovetail tenon (326) of the adapter (320) in an axial direction of the rotor (300).

2. The rotatable body (300, 400) according to claim 1,
wherein each of the n buckets (400) includes a bucket dovetail mortise (412) for engaging with the unified annular dovetail tenon (R) in order to couple the bucket (400) to the rotor (300).,

3. The rotatable body (300, 400) according to claim 1, wherein each of the n buckets (400) comprises:
a root (410) including a bucket dovetail mortise (412) to engage with a portion of the unified annular dovetail protrusion; and
a blade (420) protruding from the root (410) in a radial direction of the rotor (300),
wherein, with respect to the circumferential direction of the rotor (300), a length of the tangential entry (312), a length of the adapter dovetail tenon (324), a length of the root (410), and a length of the bucket dovetail mortise (412) are substantially identical lengths.

4. The rotatable body (300, 400) according to claim 3,
wherein first to (n-1)th buckets (400(1) to 400(n-1)) are inserted through the tangential entry (312) and then slid in the circumferential direction of the rotor (300) on the rotor dovetail tenon (314) in order to successively assemble the first to (n-1)th buckets (400(1) to 400(n-1)) with the rotor wheel (310),
wherein an nth bucket (400(n)) is assembled with the adapter (320) and the adapter (320) assembled with the nth bucket (400(n)) is inserted into the tangential entry (312) in an axial direction of the rotor (300) in order to assemble the nth bucket (400(n)) with the rotor wheel (310), and
wherein the first to (n-1)th buckets (400(1) to 400(n-1)) assembled with the rotor wheel (310) and the nth bucket (400(n)) assembled with the adapter (320) are collectively moved to a predetermined position along the circumferential direction of the rotor (300), so that
the (n-1)th bucket (400(n-1)) axially and radially overlaps a first junction between the rotor dovetail tenon (314) and the adapter dovetail tenon (324), and
the nth bucket (400(n)) axially and radially overlaps a second junction between the rotor dovetail tenon (314) and the adapter dovetail tenon (324).

5. The rotatable body (300, 400) according to claim 4, wherein, when a length of a bucket of the n buckets (400) with respect to the circumferential direction of the rotor (300) is one pitch, the predetermined position is a position to which the first to (n-1)th buckets (400(1) to 400(n-1)) assembled with the rotor wheel (310) and the nth bucket (400(n)) assembled with the adapter (320) are collectively moved by one half pitch along the circumferential direction of the rotor (300).

6. The rotatable body (300, 400) according to claim 4 or 5, further comprising:
means for fixing the first to nth bucket (400(1) to (400(n)) in the predetermined position,
wherein the fixing means comprises the rotor wheel (310), the adapter (320), and the n buckets (400).

7. The rotatable body (300, 400) according to any one of claims 4 to 6, wherein the rotor wheel (310), the adapter (320), and the n buckets (400) are configured such that, when the n buckets (400) are located in the predetermined position, the adapter (320) moves outwards in a radial direction of the rotor (300) to be caught by one or more buckets (400) among the n buckets (400), thereby preventing the n buckets (400) from moving in the circumferential direction of the rotor (300).

8. The rotatable body (300, 400) according to any one of claims 4 to 7, wherein
the rotor dovetail tenon (314) comprises:
an inner circumferential surface (314a) facing a rotational axis of the rotor (300); and
an outer circumferential surface (314b) providing a rear surface of the inner circumferential surface (314a),
the adapter dovetail tenon (324) comprises:
an inner circumferential surface (324a) facing the rotational axis of the rotor (300); and
an outer circumferential surface (324b) providing a rear surface of the inner circumferential surface (324a), and
the bucket dovetail mortise (412) comprises:
a first inner circumferential surface (412a) facing the inner circumferential surface (314a) of the rotor dovetail tenon (314);
a first outer circumferential surface (412b) facing the outer circumferential surface (314b) of the rotor dovetail tenon (314);
a second inner circumferential surface (412d) facing the inner circumferential surface (324a) of the adapter dovetail tenon (324); and
a second outer circumferential surface (412e) facing the outer circumferential surface (324b) of the adapter dovetail tenon (324),
wherein a distance between the inner and outer circumferential surfaces (314a and 314b) of the rotor dovetail tenon (314), a distance between the first inner and outer circumferential surfaces (412a and 412b) of the bucket dovetail mortise (412), and a distance between the inner and outer circumferential surfaces (324a and 324b) of the adapter dovetail tenon (324) are substantially equal to each other and are respectively smaller than a distance between the second inner and outer circumferential surfaces (412d and 412e) of the bucket dovetail mortise (412).

9. The rotatable body (300, 400) according to claim 8, wherein
a distance to the first inner circumferential surface (412a) of the bucket dovetail mortise (412) from the rotational axis of the rotor (300) is substantially equal to a distance to the second inner circumferential surface (412d) of the bucket dovetail mortise (412) from the rotational axis of the rotor (300), and
a distance to the second outer circumferential surface (412e) of the bucket dovetail mortise (412) from the rotational axis of the rotor (300) is greater than a distance to the first outer circumferential surface (412b) of the bucket dovetail mortise (412) from the rotational axis of the rotor (300).

10. The rotatable body (300, 400) according to claim 9, wherein, when the n buckets (400) move in the circumferential direction of the rotor (300), the adapter (320) is moved inwards in the radial direction of the rotor (300), so that the inner circumferential surface (324a) of the adapter dovetail tenon (324) comes into contact with the second inner circumferential surface (412d) of the bucket dovetail mortise (412) and so that the outer circumferential surface (324b) of the adapter dovetail tenon (324) is substantially coplanar with the first outer circumferential surface (412b) of the bucket dovetail mortise (412), thereby preventing the adapter dovetail tenon (324) from being caught by a stepped portion between the first and second outer circumferential surfaces (412b and 412e) of the bucket dovetail mortise (412),
wherein, when the n buckets (400) are located in the predetermined position, the adapter (320) is moved outwards in the radial direction of the rotor (300), so that the inner circumferential surface (324a) of the adapter dovetail tenon (324) is spaced apart from the second inner circumferential surface (412d) of the bucket dovetail mortise (412) and so that the outer circumferential surface (324b) of the adapter dovetail tenon (324) occupies a different plane from the first outer circumferential surface (412b) of the bucket dovetail mortise (412), thereby causing the adapter dovetail tenon (324) to be caught by the stepped portion between the first and second outer circumferential surfaces (412b and 412e) of the bucket dovetail mortise (412).

11. A steam turbine comprising:
a casing (100);
the rotatable body (300, 400) according to any one of claims 1 to 10, the rotatable body (300, 400) being rotatably provided in the casing (100); and
a nozzle configured to discharge steam toward the rotatable body (300, 400).

12. A method of manufacturing a rotatable body (300, 400) according to any of claims 1 to 10, the method comprising:
assembling first to (n-1)th buckets (400(1) to 400(n-1)) with the rotor wheel (310) by successively inserting the first to (n-1)th buckets (400(1) to 400(n-1)) through the tangential entry (312) in a circumferential direction of the rotor (300);
assembling the nth bucket (400(n)) with the adapter (320);
assembling the adapter (320) assembled with the nth bucket (400(n)) with the rotor wheel (310) assembled with the first to (n-1)th buckets (400(1) to 400(n-1)), by inserting the adapter (320) assembled with the nth bucket (400(n)) into the axial dovetail mortise (316) formed under the tangential entry (312) in an axial direction of the rotor (300) such that the rotor dovetail tenon (314) and the adapter dovetail tenon (324) form the unified annular dovetail protrusion (R) protruding radially from the circumferential surface of the rotor (300);
collectively moving the first to (n-1)th buckets (400(1) to 400(n-1)) of the rotor wheel (310)-and-bucket assembly and the nth bucket (400(n)) of the adapter (320)-and-bucket assembly, by one half pitch along the circumferential direction of the rotor (300); and
fixing the collectively moved buckets by moving the adapter (320) outwards in a radial direction of the rotor (300).

## Patentansprüche

1. Drehbarer Körper (300, 400), der Folgendes umfasst:
einen Rotor (300) und
n Schaufeln (400), um Energie von strömendem Dampf in mechanische Arbeit umzusetzen, wobei jede Schaufel (400) konfiguriert ist, in einer Weise mit tangentialem Eintritt an den Rotor (300) gekoppelt zu sein, wobei
der Rotor (300) konfiguriert ist, jede der n Schaufeln (400), die an den Rotor (300) gekoppelt sind, zu tragen, und
der Rotor (300) Folgendes umfasst:
ein Laufrad (310), das eine Umfangsfläche besitzt, an der ein tangentialer Eintritt (312) vorgesehen ist und die einen Rotorschwalbenschwanzzapfen (314) umfasst, der in einer Umfangsrichtung des Rotors (300) von einer Seite des tangentialen Eintritts (312) zur anderen Seite des tangentialen Eintritts (312) verläuft, wobei der Rotorschwalbenschwanzzapfen (314) beim tangentialen Eintritt (312) einen Spalt besitzt, und
einen Adapter (320), der konfiguriert ist, eine n-te Schaufel (400(n)) der n Schaufeln (400) an den Rotor (300) zu koppeln und der einen axialen Schwalbenschwanzzapfen (326) und einen Adapterschwalbenschwanzzapfen (324), der konfiguriert ist, den Spalt im Rotorschwalbenschwanzzapfen (314) zu füllen, wenn die n-te Schaufel (400(n)) an den Rotor (300) gekoppelt ist, umfasst, derart, dass der Rotorschwalbenschwanzzapfen (314) und der Adapterschwalbenschwanzzapfen (324) einen vereinigten ringförmigen Schwalbenschwanzvorsprung (R), der von einer Umfangsfläche des Rotors (300) radial vorsteht, bilden, wobei
das Laufrad (310) ferner ein axiales Schwalbenschwanzzapfenloch (316), das in einer Axialrichtung des Rotors (300) verläuft und unter dem tangentialen Eintritt (312) gebildet ist, enthält und
das Schwalbenschwanzzapfenloch (316) konfiguriert ist, den axialen Schwalbenschwanzzapfen (326) des Adapters (320) in einer Axialrichtung des Rotors (300) aufzunehmen.

2. Drehbarer Körper (300, 400) nach Anspruch 1, wobei
jede der n Schaufeln (400) ein Schaufelschwalbenschwanzzapfenloch (412) enthält, um mit dem vereinigten ringförmigen Schwalbenschwanzzapfen (R) in Eingriff zu sein, um die Schaufel (400) an den Rotor (300) zu koppeln.

3. Drehbarer Körper (300, 400) nach Anspruch 1, wobei jede der n Schaufeln (400) Folgendes umfasst:
eine Wurzel (410), die ein Schaufelschwalbenschwanzzapfenloch (412) enthält, um mit einem Abschnitt des vereinigten ringförmigen Schwalbenschwanzvorsprungs in Eingriff zu sein; und
ein Rotorblatt (420), das von der Wurzel (410) in einer Radialrichtung des Rotors (300) vorsteht, wobei
eine Länge des tangentialen Eintritts (312), eine Länge des Adapterschwalbenschwanzzapfens (324), eine Länge der Wurzel (410) und eine Länge des Schaufelschwalbenschwanzzapfenlochs (412) in Bezug auf die Umfangsrichtung des Rotors (300) im Wesentlichen gleiche Längen sind.

4. Drehbarer Körper (300, 400) nach Anspruch 3, wobei
eine erste bis (n - 1)-te Schaufel (400(1) bis 400(n - 1)) über den tangentialen Eintritt (312) eingesetzt sind und dann in der Umfangsrichtung des Rotors (300) auf den Rotorschwalbenschwanzzapfen (314) gleitend geschoben sind, um nacheinander die erste bis (n - 1)-te Schaufel (400(1) bis 400(n - 1)) mit dem Laufrad (310) zusammenzusetzen,
eine n-te Schaufel (400(n)) mit dem Adapter (320) zusammengesetzt ist und der Adapter (320), der mit der n-ten Schaufel (400(n)) zusammengesetzt ist, in den tangentialen Eintritt (312) in einer Axialrichtung des Rotors (300) eingesetzt ist, um die n-te Schaufel (400(n)) mit dem Laufrad (310) zusammenzusetzen, und
die erste bis (n - 1)-te Schaufel (400(1) bis 400(n - 1)), die mit dem Laufrad (310) zusammengesetzt sind, und die n-te Schaufel (400(n)), die mit dem Adapter (320) zusammengesetzt ist, gemeinsam zu einer vorgegebenen Position entlang der Umfangsrichtung des Rotors (300) bewegt werden, derart, dass
die (n - 1)-te Schaufel (400(n - 1)) mit einer ersten Verbindung zwischen dem Rotorschwalbenschwanzzapfen (314) und dem Adapterschwalbenschwanzzapfen (324) axial und radial überlappt und
die n-te Schaufel (400(n)) mit einer zweiten Verbindung zwischen dem Rotorschwalbenschwanzzapfen (314) und dem Adapterschwalbenschwanzzapfen (324) axial und radial überlappt.

5. Drehbarer Körper (300, 400) nach Anspruch 4, wobei dann, wenn eine Länge einer Schaufel der n Schaufeln (400) in Bezug auf die Umfangsrichtung des Rotors (300) ein Abstand ist, die vorgegebene Position eine Position ist, zu der die erste bis (n - 1)-te Schaufel (400(1) bis 400(n - 1)), die mit dem Laufrad (310) zusammengesetzt sind, und die n-te Schaufel (400(n)), die mit dem Adapter (320) zusammengesetzt ist, um einen halben Abstand entlang der Umfangsrichtung des Rotors (300) gemeinsam bewegt werden.

6. Drehbarer Körper (300, 400) nach Anspruch 4 oder 5, der ferner Folgendes umfasst:
ein Mittel zum Befestigen der ersten bis n-ten Schaufel (400(1) zu (400(n)) an der vorgegebenen Position, wobei
das Befestigungsmittel das Laufrad (310), den Adapter (320) und die n Schaufeln (400) umfasst.

7. Drehbarer Körper (300, 400) nach einem der Ansprüche 4 bis 6, wobei das Laufrad (310), der Adapter (320) und die n Schaufeln (400) derart konfiguriert sind, dass dann, wenn sich die n Schaufeln (400) an der vorgegebenen Position befinden, der Adapter (320) sich in einer Radialrichtung des Rotors (300) nach außen bewegt, derart, dass er durch eine oder mehrere Schaufeln (400) unter den n Schaufeln (400) eingefangen wird, wodurch verhindert wird, dass sich die n Schaufeln (400) in der Umfangsrichtung des Rotors (300) bewegen.

8. Drehbarer Körper (300, 400) nach einem der Ansprüche 4 bis 7, wobei
der Rotorschwalbenschwanzzapfen (314) Folgendes umfasst:
eine Innenumfangsfläche (314a), die einer Drehachse des Rotors (300) zugewandt ist; und
eine Außenumfangsfläche (314b), die eine Rückseite der Innenumfangsfläche (314a) bereitstellt,
der Adapterschwalbenschwanzzapfen (324) Folgendes umfasst:
eine Innenumfangsfläche (324a), die der Drehachse des Rotors (300) zugewandt ist; und
eine Außenumfangsfläche (324b), die eine Rückseite der Innenumfangsfläche (324a) bereitstellt, und
das Schaufelschwalbenschwanzzapfenloch (412) Folgendes umfasst:
eine erste Innenumfangsfläche (412a), die der Innenumfangsfläche (314a) des Rotorschwalbenschwanzzapfens (314) zugewandt ist;
eine erste Außenumfangsfläche (412b), die der Außenumfangsfläche (314b) des Rotorschwalbenschwanzzapfens (314) zugewandt ist;
eine zweite Innenumfangsfläche (412d), die der Innenumfangsfläche (324a) des Adapterschwalbenschwanzzapfens (324) zugewandt ist; und
eine zweite Außenumfangsfläche (412e), die der Außenumfangsfläche (324b) des Adapterschwalbenschwanzzapfens (324) zugewandt ist, wobei
ein Abstand zwischen der Innenumfangsfläche und der Außenumfangsfläche (314a und 314b) des Rotorschwalbenschwanzzapfens (314), ein Abstand zwischen der ersten Innenumfangsfläche und der ersten Außenumfangsfläche (412a und 412b) des Schaufelschwalbenschwanzzapfenlochs (412) und ein Abstand zwischen der Innenumfangsfläche und der Außenumfangsfläche (324a und 324b) des Adapterschwalbenschwanzzapfens (324) im Wesentlichen einander gleich sind und jeweils kleiner als ein Abstand zwischen der zweiten Innenumfangsfläche und der zweiten Außenumfangsfläche (412d und 412e) des Schaufelschwalbenschwanzzapfenlochs (412) sind.

9. Drehbarer Körper (300, 400) nach Anspruch 8, wobei
ein Abstand zur ersten Innenumfangsfläche (412a) des Schaufelschwalbenschwanzzapfenlochs (412) von der Drehachse des Rotors (300) im Wesentlichen gleich einem Abstand zur zweiten Innenumfangsfläche (412d) des Schaufelschwalbenschwanzzapfenlochs (412) von der Drehachse des Rotors (300) ist und
ein Abstand zur zweiten Innenumfangsfläche (412e) des Schaufelschwalbenschwanzzapfenlochs (412) von der Drehachse des Rotors (300) größer als ein Abstand zur ersten Außenumfangsfläche (412b) des Schaufelschwalbenschwanzzapfenlochs (412) von der Drehachse des Rotors (300) ist.

10. Drehbarer Körper (300, 400) nach Anspruch 9, wobei dann, wenn sich die n Schaufeln (400) in der Umfangsrichtung des Rotors (300) bewegen, der Adapter (320) in der Radialrichtung des Rotors (300) nach innen bewegt wird, derart, dass die Innenumfangsfläche (324a) des Adapterschwalbenschwanzzapfens (324) in Kontakt mit der zweiten Innenumfangsfläche (412d) des Schaufelschwalbenschwanzzapfenlochs (412) gelangt, und derart, dass die Außenumfangsfläche (324b) des Adapterschwalbenschwanzzapfens (324) im Wesentlichen mit der ersten Außenumfangsfläche (412b) des Schaufelschwalbenschwanzzapfenlochs (412) komplanar ist, wodurch verhindert wird, dass der Adapterschwalbenschwanzzapfen (324) durch einen abgestuften Abschnitt zwischen der ersten und der zweiten Außenumfangsfläche (412b und 412e) des Schaufelschwalbenschwanzzapfenlochs (412) eingefangen wird, wobei
dann, wenn sich die n Schaufeln (400) an der vorgegebenen Position befinden, der Adapter (320) in der Radialrichtung des Rotors (300) nach außen bewegt wird, derart, dass die Innenumfangsfläche (324a) des Adapterschwalbenschwanzzapfens (324) von der zweiten Innenumfangsfläche (412d) des Schaufelschwalbenschwanzzapfenlochs (412) beabstandet ist, und derart, dass die Außenumfangsfläche (324b) des Adapterschwalbenschwanzzapfens (324) eine von der ersten Außenumfangsfläche (412b) des Schaufelschwalbenschwanzzapfenlochs (412) verschiedene Ebene belegt, wodurch bewirkt wird, dass der Adapterschwalbenschwanzzapfen (324) durch den abgestuften Abschnitt zwischen der ersten und der zweiten Außenumfangsfläche (412b und 412e) des Schaufelschwalbenschwanzzapfenlochs (412) gefangen wird.

11. Dampfturbine, die Folgendes umfasst:
ein Gehäuse (100);
den drehbaren Körper (300, 400) gemäß einem der Ansprüche 1 bis 10, wobei der drehbare Körper (300, 400) im Gehäuse (100) drehbar vorgesehen ist; und
eine Düse, die konfiguriert ist, Dampf zum drehbaren Körper (300, 400) auszustoßen.

12. Verfahren zum Herstellen eines drehbaren Körpers (300, 400) nach einem der Ansprüche 1 bis 10, wobei das Verfahren Folgendes umfasst:
Zusammensetzen einer ersten bis (n - 1)-ten Schaufel (400(1) bis 400(n - 1)) mit dem Laufrad (310) durch Einsetzen der ersten bis (n - 1)-ten Schaufel (400(1) bis 400(n - 1)) nacheinander über den tangentialen Eintritt (312) in einer Umfangsrichtung des Rotors (300);
Zusammensetzen der n-ten Schaufel (400(n)) mit dem Adapter (320);
Zusammensetzen des Adapters (320), der mit der n-ten Schaufel (400(n)) zusammengesetzt ist, mit dem Laufrad (310), das mit der ersten bis (n - 1)-ten Schaufel (400(1) bis 400(n - 1)) zusammengesetzt ist, durch Einsetzten des Adapters (320), der mit der n-ten Schaufel (400(n)) zusammengesetzt ist, in das axiale Schwalbenschwanzzapfenloch (316), das unter dem tangentialen Eintritt (312) in einer Axialrichtung des Rotors (300) gebildet ist, derart, dass der Rotorschwalbenschwanzzapfen (314) und der Adapterschwalbenschwanzzapfen (324) den vereinigten ringförmigen Schwalbenschwanzvorsprung (R), der von einer Umfangsfläche des Rotors (300) radial vorsteht, bilden;
gemeinsames Bewegen der ersten bis (n - 1)-ten Schaufel (400(1) bis 400(n - 1)) der Anordnung aus Laufrad (310) und Schaufeln und der n-ten Schaufel (400(n)) der Anordnung aus Adapter (320) und Schaufel um einen halben Abstand entlang der Umfangsrichtung des Rotors (300) und
Befestigen der gemeinsam bewegten Schaufeln durch Bewegen des Adapters (320) in einer Radialrichtung des Rotors (300) nach außen.

## Revendications

1. Corps rotatif (300, 400) comportant :
un rotor (300) ; et
n ailettes (400) pour convertir l'énergie d'une vapeur en circulation en travail mécanique, chaque ailette (400) étant configurée pour être couplée au rotor (300) par l'intermédiaire d'une entrée tangentielle,
dans lequel le rotor (300) est configuré pour supporter chacune des n ailettes (400) couplées au rotor (300),
dans lequel le rotor (300) comporte :
une roue de rotor (310) ayant une surface circonférentielle sur laquelle une entrée tangentielle (312) est prévue et comportant un tenon de queue d'aronde de rotor (314) s'étendant dans une direction circonférentielle du rotor (300) depuis un côté de l'entrée tangentielle (312) jusqu'à l'autre côté de l'entrée tangentielle (312), le tenon de queue d'aronde de rotor (314) ayant un espace au niveau de l'entrée tangentielle (312), et
un adaptateur (320) configuré pour coupler une n^{ème} ailette (400(n)) parmi les n ailettes (400) au rotor (300) et comportant un tenon de queue d'aronde axial (326) et un tenon de queue d'aronde d'adaptateur (324) configurés pour combler l'espace dans le tenon de queue d'aronde de rotor (314) lorsque la n^{ème} ailette (400(n)) est couplée au rotor (300) de telle sorte que le tenon de queue d'aronde de rotor (314) et le tenon de queue d'aronde d'adaptateur (324) forment une saillie de queue d'aronde annulaire unifiée (R) faisant radialement saillie depuis une surface circonférentielle du rotor (300),
dans lequel la roue de rotor (310) inclut en outre une mortaise de queue d'aronde axiale (316) s'étendant dans une direction axiale du rotor (300) et formée sous l'entrée tangentielle (312) et
dans lequel la mortaise de queue d'aronde axiale (316) est configurée pour recevoir le tenon de queue d'aronde axial (326) de l'adaptateur (320) dans une direction axiale du rotor (300).

2. Corps rotatif (300, 400) selon la revendication 1,
dans lequel chacune des n ailettes (400) inclut une mortaise de queue d'aronde d'ailette (412) pour venir en prise avec le tenon de queue d'aronde annulaire unifié (R) afin de coupler l'ailette (400) au rotor (300).

3. Corps rotatif (300, 400) selon la revendication 1, dans lequel chacune des n ailettes (400) comporte :
une emplanture (410) incluant une mortaise de queue d'aronde d'ailette (412) pour venir en prise avec une partie de la saillie de queue d'aronde annulaire unifiée ; et
une pale (420) faisant saillie à partir de l'emplanture (410) dans une direction radiale du rotor (300),
dans lequel, par rapport à la direction circonférentielle du rotor (300), une longueur de l'entrée tangentielle (312), une longueur du tenon de queue d'aronde d'adaptateur (324), une longueur de l'emplanture (410) et une longueur de la mortaise de queue d'aronde d'ailette (412) ont des longueurs sensiblement identiques.

4. Corps rotatif (300, 400) selon la revendication 3,
dans lequel des première à (n-1)^{ème} ailettes (400(1) à 400(n-1)) sont insérées à travers l'entrée tangentielle (312) et ensuite glissées dans la direction circonférentielle du rotor (300) sur le tenon de queue d'aronde de rotor (314) afin d'assembler successivement les première à (n-1)^{ème} ailettes (400(1) à 400(n-1)) avec la roue de rotor (310),
dans lequel une n^{ème} ailette (400(n)) est assemblée avec l'adaptateur (320) et l'adaptateur (320) assemblé avec la n^{ème} ailette (400(n)) est inséré dans l'entrée tangentielle (312) dans une direction axiale du rotor (300) afin d'assembler la n^{ème} ailette (400(n)) avec la roue de rotor (310), et
dans lequel les première à (n-1)^{ème} ailettes (400(1) à 400(n-1)) assemblées avec la roue de rotor (310) et la n^{ème} ailette (400(n)) assemblée avec l'adaptateur (320) sont collectivement amenées à une position prédéterminée le long de la direction circonférentielle du rotor (300), de sorte que
la (n-1)^{ème} ailette (400(n-1)) chevauche axialement et radialement une première jonction entre le tenon de queue d'aronde de rotor (314) et le tenon de queue d'aronde d'adaptateur (324), et
la n^{ème} ailette (400) chevauche axialement et radialement une seconde jonction entre le tenon de queue d'aronde de rotor (314) et le tenon de queue d'aronde d'adaptateur (324).

5. Corps rotatif (300, 400) selon la revendication 4, dans lequel, lorsqu'une longueur d'une ailette parmi les n ailettes (400) par rapport à la direction circonférentielle du rotor (300) représente un pas, la position prédéterminée est une position jusqu'à laquelle les première à (n-1)^{ème} ailettes (400(1) à 400(n-1)) assemblées avec la roue de rotor (310) et la n^{ème} ailette (400(n)) assemblée avec l'adaptateur (320) sont collectivement déplacées d'un demi pas le long de la direction circonférentielle du rotor (300).

6. Corps rotatif (300, 400) selon la revendication 4 ou 5, comportant en outre : des moyens pour fixer les première à n^{ème} ailettes (400(1) à 400(n)) dans la position prédéterminée, dans lequel les moyens de fixation comportent la roue de rotor (310), l'adaptateur (320) et les n ailettes (400).

7. Corps rotatif (300, 400) selon l'une quelconque des revendications 4 à 6, dans lequel la roue de rotor (310), l'adaptateur (320) et les n ailettes (400) sont configurés de telle sorte que, lorsque les n ailettes (400) sont situées dans la position prédéterminée, l'adaptateur (320) se déplace vers l'extérieur dans une direction radiale du rotor (300) pour être attrapé par une ou plusieurs ailettes (400) parmi les n ailettes (400), en empêchant ainsi les n ailettes (400) de se déplacer dans la direction circonférentielle du rotor (300).

8. Corps rotatif (300, 400) selon l'une quelconque des revendications 4 à 7, dans lequel
le tenon de queue d'aronde de rotor (314) comporte :
une surface circonférentielle intérieure (314a) dirigée vers un axe de rotation du rotor (300) ; et
une surface circonférentielle extérieure (314b) fournissant une surface arrière de la surface circonférentielle intérieure (314a),
le tenon de queue d'aronde d'adaptateur (324) comporte :
une surface circonférentielle intérieure (324a) dirigée vers l'axe de rotation du rotor (300) ; et
une surface circonférentielle extérieure (324b) fournissant une surface arrière de la surface circonférentielle intérieure (324a), et
la mortaise de queue d'aronde d'ailette (412) comporte :
une première surface circonférentielle intérieure (412a) dirigée vers la surface circonférentielle intérieure (314a) du tenon de queue d'aronde de rotor (314) ;
une première surface circonférentielle extérieure (412b) dirigée vers la surface circonférentielle extérieure (314b) du tenon de queue d'aronde de rotor (314) ;
une seconde surface circonférentielle intérieure (412d) dirigée vers la surface circonférentielle intérieure (324a) du tenon de queue d'aronde d'adaptateur (324) ; et
une seconde surface circonférentielle extérieure (412e) dirigée vers la surface circonférentielle extérieure (324b) du tenon de queue d'aronde d'adaptateur (324),
dans lequel une distance entre les surfaces circonférentielles intérieure et extérieure (314a et 314b) du tenon de queue d'aronde de rotor (314), une distance entre les premières surfaces circonférentielles intérieure et extérieure (412a et 412b) de la mortaise de queue d'aronde d'ailette (412), et une distance entre les surfaces circonférentielles intérieure et extérieure (324a et 324b) du tenon de queue d'aronde d'adaptateur (324) sont sensiblement égales les unes aux autres et sont respectivement inférieures à une distance entre les secondes surfaces circonférentielles intérieure et extérieure (412d et 412e) de la mortaise de queue d'aronde d'ailette (412).

9. Corps rotatif (300, 400) selon la revendication 8, dans lequel
une distance entre la première surface circonférentielle intérieure (412a) de la mortaise de queue d'aronde d'ailette (412) et l'axe de rotation du rotor (300) est sensiblement égale à une distance entre la seconde surface circonférentielle intérieure (412d) de la mortaise de queue d'aronde d'ailette (412) et l'axe de rotation du rotor (300), et
une distance entre la seconde surface circonférentielle extérieure (412e) de la mortaise de queue d'aronde d'ailette (412) et l'axe de rotation du rotor (300) est supérieure à une distance entre la première surface circonférentielle extérieure (412b) de la mortaise de queue d'aronde d'ailette (412) et l'axe de rotation du rotor (300).

10. Corps rotatif (300, 400) selon la revendication 9, dans lequel, lorsque les n ailettes (400) se déplacent dans la direction circonférentielle du rotor (300), l'adaptateur (320) est déplacé vers l'intérieur dans la direction radiale du rotor (300), de sorte que la surface circonférentielle intérieure (324a) du tenon de queue d'aronde d'adaptateur (324) vient en contact avec la seconde surface circonférentielle intérieure (412d) de la mortaise de queue d'aronde d'ailette (412) et de sorte que la surface circonférentielle extérieure (324b) du tenon de queue d'aronde d'adaptateur (324) est sensiblement coplanaire à la première surface circonférentielle extérieure (412b) de la mortaise de queue d'aronde d'ailette (412), en empêchant ainsi le tenon de queue d'aronde d'adaptateur (324) d'être attrapé par une partie étagée entre les première et seconde surfaces circonférentielles extérieures (412b et 412e) de la mortaise de queue d'aronde d'ailette (412),
dans lequel, lorsque les n ailettes (400) sont situées dans la position prédéterminée, l'adaptateur (320) est déplacé vers l'extérieur dans la direction radiale du rotor (300), de sorte que la surface circonférentielle intérieure (324a) du tenon de queue d'aronde d'adaptateur (324) est espacée de la seconde surface circonférentielle intérieure (412d) de la mortaise de queue d'aronde d'ailette (412) et de sorte que la surface circonférentielle extérieure (324b) du tenon de queue d'aronde d'adaptateur (324) occupe un plan différent de la première surface circonférentielle extérieure (412b) de la mortaise de queue d'aronde d'ailette (412), en amenant ainsi le tenon de queue d'aronde d'adaptateur (324) à être attrapé par la partie étagée entre les première et seconde surfaces circonférentielles extérieures (412b et 412e) de la mortaise de queue d'aronde d'ailette (412).

11. Turbine à vapeur comportant :
un carter (100) ;
le corps rotatif (300, 400) selon l'une quelconque des revendications 1 à 10, le corps rotatif (300, 400) étant agencé de manière rotative dans le carter (100) ; et
une buse configurée pour décharger de la vapeur vers le corps rotatif (300, 400).

12. Procédé de fabrication d'un corps rotatif (300, 400) selon l'une quelconque des revendications 1 à 10, le procédé comportant les étapes consistant à :
assembler des première à (n-1)^{ème} ailettes (400(1) à 400(n-1)) avec la roue de rotor (310) en insérant successivement les première à (n-1)^{ème} ailettes (400(1) à 400(n-1)) à travers l'entrée tangentielle (312) dans une direction circonférentielle du rotor (300) ;
assembler la n^{ème} ailette (400(n)) avec l'adaptateur (320) ;
assembler l'adaptateur (320) assemblé avec la n^{ème} ailette (400(n)) avec la roue de rotor (310) assemblée avec les première à (n-1)^{ème} ailettes (400(1) à 400(n-1)), en insérant l'adaptateur (320) assemblé avec la n^{ème} ailette (400(n)) dans la mortaise de queue d'aronde axiale (316) formée sous l'entrée tangentielle (312) dans une direction axiale du rotor (300) de telle sorte que le tenon de queue d'aronde de rotor (314) et le tenon de queue d'aronde d'adaptateur (324) forment la saillie de queue d'aronde annulaire unifiée (R) faisant radialement saillie depuis la surface circonférentielle du rotor (300) ;
déplacer collectivement les première à (n-1)^{ème} ailettes (400(1) à 400(n-1)) de l'ensemble roue de rotor (310) et ailette et la n^{ème} ailette (400(n)) de l'ensemble adaptateur (320) et ailette, d'un demi pas le long de la direction circonférentielle du rotor (300) ; et
fixer les ailettes collectivement déplacées en déplaçant l'adaptateur (320) vers l'extérieur dans une direction radiale du rotor (300).
